# EUROPEAN PATENT APPLICATION

(11) **EP 2 687 736 A1**
(43) Date of publication of application: **22.01.2014**
(21) Application number: 12290243.0
(22) Date of filing: 20.07.2012
(51) Int. Cl.: F16C 13/00, F16C 41/04, F16H 7/00, F16C 27/06, F16H 7/20

(54) **Roller unit with a bearing and a screw and method for manufacturing the same**

(71) Applicant: Aktiebolaget SKF, 415 50 Göteborg (SE)
(72) Inventor: Lasserre, Mikael, 37700 Saint-Pierre-des-Corps (FR); Prouteau, Thierry, 37540 Saint-Cyr-sur-Loire (FR)
(74) Representative: Kohl, Thomas

(57) **Abstract**

The invention starts from a roller unit comprising a roller bearing (12), a screw (14) and a holding means for retaining the screw (14) in a preassembled state of the roller unit.

It is proposed that the holding means is formed as an elastic ring (16) in direct contact with a central bore (20) of the inner ring (18) of the bearing (12) and with a portion (22, 26) of the screw (14) having a diameter at least as large as a diameter of a threaded portion (22) of the screw (14).

## Description

The invention relates to a roller unit, in particular a belt tensioner or idler unit comprising a roller bearing, a screw and a holding means for retaining the screw in a preassembled state of the roller unit.

Roller units of this type are generally used for tensioning or guiding traction means such as belts or chains in automobiles delivered as pre-assembled units to a car manufacturer's site. For reasons of safety, an unintended disassembly of the units during the assembly or mounting should be avoided, in particular in view of the risk that the unit might be re-assembled in a wrong way.

The document DE 198 36 191 A1 discloses a belt tensioner unit with a screw being provided with an undercut, i.e. a portion with a reduced diameter and with a c-shaped holding ring engaging with the undercut. However, the DE 198 36 191 A1 requires the use of expensive non-standard screws with undercut and is therefore not very cost-efficient,

Other documents, e.g. EP 2 339 211 A1 and DE 100 03 208 A1 relate to belt tensioner units including distance elements or spacers arranged between the screw and the inner ring of the roller bearing and ensuring a given distance between an axial end-face of the inner ring and the motor block or other support onto which the unit shall be mounted. The spacer is then fixed to the screw with an elastic o-ring.

Vibrations of the spacer element and/or of the inner ring during transport may lead to impacts between the spacer element and the inner ring, which may result in to a loosening of the elastic-o-ring such that the assembly is not very shock-proof. Further, the introduction of a spacer element inevitably increases the geometry risk of the unit after being mounted onto its support.

The invention solves the above problems by providing a roller unit and a method for manufacturing the same according to the independent claims. Preferred embodiments of the invention may be derived from the dependent claims.

The invention starts from roller unit comprising a roller bearing, a screw and a holding means for retaining the screw in a preassembled configuration of the roller unit.

It is proposed that the holding means is formed as an elastic ring in direct contact with a central bore of the inner ring of the bearing and with a portion of the screw having a diameter at least as large as a diameter of a threaded portion of the screw. The solution of the invention has the advantage of avoiding expensive special screws with reduced-diameter portions while ensuring a reliable retaining of the screw.

Preferably, the roller unit is a belt tensioner or idler for tensioning or guiding traction means in an automobile with a pulley attached to an outer ring of the bearing. The high degree of reliability is of particular relevance in this highly automated field of technology with highly optimized processes.

The pulley may be made of plastic, integrally molded with the outer ring or not or may be made of stamped sheet metal. The roller bearing may be a single-row or double-row ball bearing or a bearing with cylindrical or other types of roller elements. It is perfectly possible to use cost-saving pulleys, bearing rings or simple bearings for realizing the invention.

The expression "diameter of the threaded portion" refers to the outer diameter or major diameter of the thread.

In a preferred embodiment of the invention, the elastic ring is arranged entirely within the axial range covered by the inner ring of the bearing. The function of the elastic ring is the retention of the screw during the transport and the assembly procedure. Once the unit is mounted to the engine- or transmission housing, the belt tensioner is fixed with the screw clamping the inner ring of the roller bearing between the screw head or a washer and the support of the unit, i.e. the motor block or the transmission housing, wherein an additional distance element may or may not be provided between the inner ring and the support.

Preferably, the screw has a shank with a minimum diameter corresponding to the diameter of the threaded portion, i.e, without undercut portion. This leads to reduced costs as compared to shanks with undercut.

Further, it is proposed that the central bore of the inner ring of the bearing has a simple cylindrical inner surface, which may in particular be free of grooves or other structures and no high precision is required. The invention enables the use of cost-saving standard inner rings.

In a preferred embodiment of the invention, the elastic ring is radially compressed by the inner surface of the bore. This leads to a good force-fitting engagement between the inner ring and the elastic ring.

Preferably, the inner diameter of the elastic ring is larger than an outer diameter of the threaded portion of the screw in an uncompressed state of the elastic ring and the inner diameter of the elastic ring abuts with a contact force onto the threaded portion of the screw when elastic ring is mounted in the roller unit. If the screw was not provided, the inner diameter of the elastic ring as compressed by the inner ring of the baring would have a smaller diameter than the outer diameter of the threaded portion of the screw.

In an alternative embodiment of the invention, the elastic ring is integrally molded with the inner ring. This may reduce assembling costs for the unit.

Further, the pulley may be bonded to the outer ring of the bearing by overmolding. In particular, the elastic ring and the pulley may be manufactured in the same injection-molding process in order to achieve a further cost-reduction.

A further aspect of the invention relates to a method for manufacturing a roller unit as described above. It is proposed that the method comprises the step of compressing the elastic ring radially in order to fit the elastic ring into a central bore of the inner ring of the bearing. This results in a good and reliable force-fitting engagement between the inner ring and the elastic ring while keeping the assembly procedure simple.

In one possible embodiment of the method, the elastic ring is fitted over the threaded portion of the screw before being compressed and fitted into the central bore of the inner ring. As a consequence of the non-compressed inner diameter of the elastic ring, the step of fitting the elastic ring over the threaded portion is very simple and may even be done by hand.

Further, it is proposed that the step of compressing the elastic ring radially is executed while the screw is arranged in the central bore of the inner ring. Inserting the screw into the inner ring before providing the elastic retention ring greatly simplifies the assembly procedure.

The above description of the invention as well as the appended claims, figures and the following description of preferred embodiments show multiple characterizing features of the invention in specific combinations. The skilled person will easily be able to consider further combinations or sub-combinations of these features in order to adapt the invention as defined in the claims to his specific needs.
- Fig. 1: is a sectional view of a roller unit according to the invention;
- Figs. 2a - 2c: are schematic illustrations of a first assembly process of a roller unit according to Fig. 1; and
- Figs. 3a - 3c: are schematic illustrations of second assembly process of a roller unit according to Fig. 1.

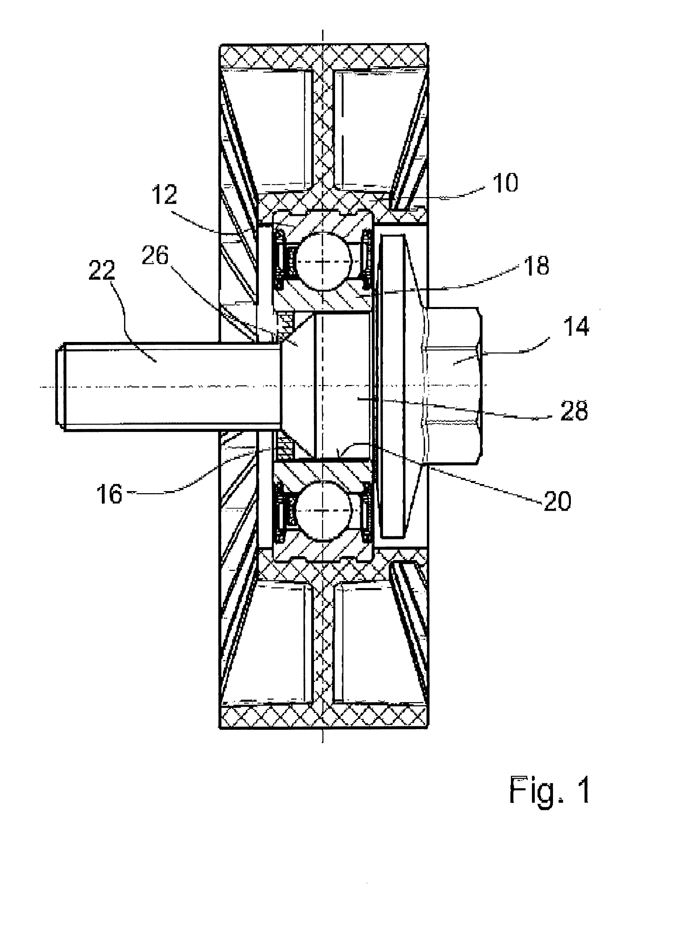

Fig. 1 is a sectional view of a roller unit formed as a belt tensioner unit according to the invention.

The belt tensioner unit comprises a pulley 10, a roller bearing 12, a screw 14 and a holding means for retaining the screw 14 in a preassembled state of the belt tensioner unit.

The holding means is formed as an elastic ring 16 in direct contact with an inner wall of a central bore 20 of an inner ring 18 of the bearing 12 and with a threaded portion 22 of the screw 14 and with a tapered part 26 of the screw 14. The diameter of the tapered part 26 is larger than the diameter of the threaded portion 22 of the screw 14 and increases from the tapered portion 22 to a cylindrical centering portion 28 having a diameter essentially equal to the inner diameter of the central bore 20.

The elastic ring 16 is arranged completely within the axial range covered by the inner ring 18 of the bearing 12, i.e. does not extend beyond the axial end faces of the inner ring 18. The belt tensioner unit is configured to be mounted to a motor block or to a transmission housing (not shown) of an automobile using the screw 14. In the mounted state, the inner ring 18 of the bearing 12 is clamped between a base plate of a head of the screw 14 and the housing.

In the mounted configuration, the axial end faces of the inner ring 18 serve as contact surfaces transmitting the clamping force and aligning the unit. The arrangement of the elastic ring 16 within the axial extension of the inner ring 18 avoids any interferences of the elastic ring 16 with the contact surfaces ensuring this fixation.

One of the advantages of the invention is that the screw 14 is of cost-saving standard type, i.e. the screw 14 has a shank without undercut portion.

Similarly, the bearing 12 is of standard type, i.e. the central bore 20 of the inner ring 18 of the bearing 12 has a simple cylindrical inner surface.

The elastic ring 16 is radially compressed by the inner surface of the central bore 20 of the inner ring 18 such that a force-fitting engagement is created therebetween.

The inner diameter of the elastic ring 16 is larger than an outer diameter of the threaded portion 22 of the screw 14 in an uncompressed configuration of the elastic ring 16 such that no force is required to fit the uncompressed ring 16 over the threaded portion 22. At the same time, the inner diameter of the elastic ring 16 abuts with a contact force onto the threaded portion 22 and the tapered portion 26 of the screw 14 when elastic ring 16 is compressed by the inner ring 18 and mounted in the belt tensioner unit as illustrated in Fig. 1.

In an alternative embodiment of the invention the elastic ring 16 is integrally molded with the inner ring 18. This reduces the number of parts and enables exploiting synergies when the pulley 10 is bonded to the outer ring of the bearing 12 by overmolding as well, in particular when the the elastic ring 16 and the pulley 10 are manufactured in the same injection-molding process.

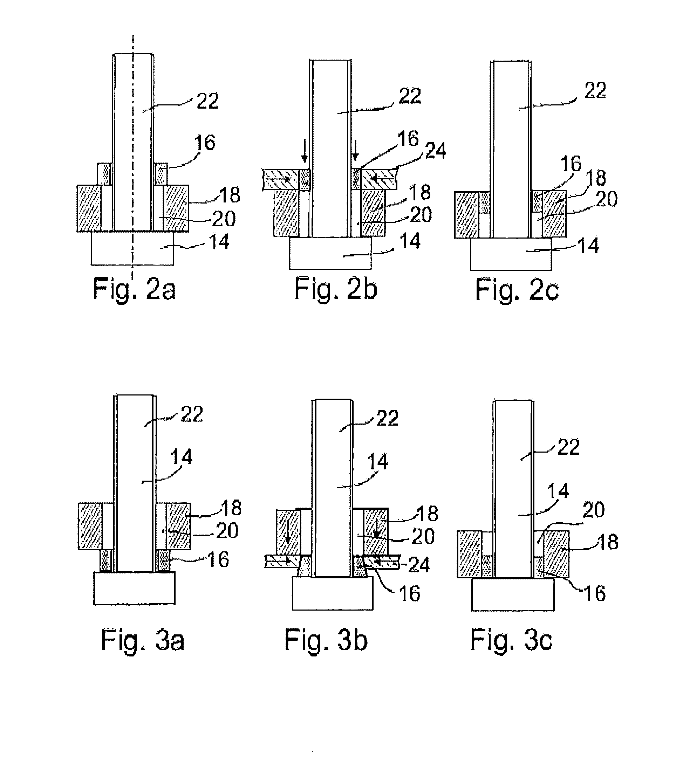

Figs. 2a - 2c are schematic illustrations of a first assembly process of a belt tensioner unit according to Fig, 1, For reasons of simplicity, the tapered part 26 of the screw 14 is not illustrated. It is perfectly possible to use the invention with screws 14 not being provided with a tapered part.

First, the screw 14 is inserted freely into the bearing 12 inner ring 18 bore. The elastic ring 16 is then fitted over the threaded portion 22 of the screw 14 until it abuts with an axial end face of the inner ring 18 (Fig. 2a). Since the inner diameter of the elastic ring 16 in the uncompressed state is larger than the outer diameter of the threaded portion 22 of the screw 14, the elastic ring 16 can be fitted over the screw 14 easily,

Then, the elastic ring 16 is compressed radially inward with a suitable compression tool 24 (Fig. 2b) and then axially pressed into the central bore 20 of the inner ring 18 while being guided by the inner surface of the tool 24. The compression tool 24 comprises preferably multiple sectors which can be moved radially inward. Alternatively, it would be possible to use a suitable gripper.

The axial shifting force needed to press the elastic ring 16 into the gap between the screw 14 and the ring 18 can be generated by another tool (not illustrated) with a ring-shaped pressing surface.

When the elastic ring 16 is completely inserted into the space between the screw 14 and the inner ring 18, the radially inner surface maintains the compression force acting on the ring 16 and the tool may be removed (Fig, 2c). This sequence of radial compression and axial shifting constitutes the step of compressing the elastic ring 16 radially in order to fit the elastic ring 16 into a central bore 20 of the inner ring 18 of the bearing 12. The step of compressing the elastic ring 16 radially is executed while the screw 14 is arranged in the central bore 20 of the inner ring 18.

The elastic ring 16 may optionally be provided with a chamfered radially outer edge facilitating the fitting of the ring into the inner ring 18, possibly even without a tool generating the radial compression force. A further chamfer at a radially inner edge of the elastic ring 16 may optionally be provided to adapt to the shape of the taper 26 of the screw 14.

In the course of the compression of the elastic ring 16, the inner diameter of the elastic ring 16 is reduced as a consequence of the radial compression until it comes to abutment with the radially outer surface of the threaded portion 22 of the screw 14. Further compression leads to a contact force with which the inner diameter of the elastic ring 16 thrusts on the thread such that a strong friction force has to be overcome for axially moving the elastic ring 16. The material of the inner ring 18 is chosen such that such an axial movement does not lead to a substantial chipping of the material resulting in a reduction of the contact force or the like. The material may e.g. be rubber or plastic.

Figs. 3a - 3c are schematic illustrations of second assembly process of a belt tensioner unit according to Fig. 1. According to the second assembly process, the elastic ring 16 is first fitted over the screw (Fig. 3a) and then the bearing with the pulley (not illustrated) and inner ring 18 are fitted over the screw 14 or the screw 14 with the elastic ring 16 is inserted into the central bore 20 until the elastic ring 16 abuts with the axial end-face of the inner ring 18 (Fig. 3b), Then, the inner ring 18 is radially compressed with a suitable tool 24 and pushed into the central bore 20 of the inner ring 18. The axial thickness of the tool 24 is preferably smaller than the thickness of the elastic ring 16.

## Claims

1. Roller unit comprising a roller bearing (12), a screw (14) and a holding means for retaining the screw (14) in a preassembled state of the roller unit, **characterized in that** the holdings means is formed as an elastic ring (16) in direct contact with a central bore (20) of the inner ring (18) of the bearing (12) and with a portion (22, 26) of the screw (14) having a diameter at least as large as a diameter of a threaded portion (22) of the screw (14).

2. Roller unit according to claim 1, **characterized in that** the elastic ring (16) is arranged completely within the axial extension of the inner ring (18) of the bearing (12),

3. Roller unit according to one of the preceding claims, **characterized in that** the screw (14) has a shank with a minimum diameter larger than a diameter of the threaded portion (22) of the screw (14).

4. Roller unit according to one of the preceding claims, **characterized in that** the central bore (20) of the inner ring (18) of the bearing (12) has a simple cylindrical inner surface.

5. Roller unit according to one of the preceding claims, **characterized in that** the elastic ring (16) is radially compressed by the inner surface of the central bore (20).

6. Roller unit according to claim 5, **characterized in that** an inner diameter of the elastic ring (16) is larger than an outer diameter of the threaded portion (22) of the screw (14) in an uncompressed state of the elastic ring (16) and that the inner diameter of the elastic ring (16) abuts with a contact force onto the threaded portion (22) of the screw (14) when elastic ring (16) is mounted in the roller unit.

7. Roller unit according to one of claims 1 - 4, **characterized in that** the elastic ring (16) is integrally molded with the inner ring (18).

8. Roller unit according to one of the preceding claims, **characterized by** comprising a pulley (10) attached to an outer ring of the bearing (12).

9. Roller unit according to claims 7 and 8, **characterized in that** the elastic ring (16) and the pulley (10) are manufactured in the same injection-molding process.

10. Method for manufacturing a roller unit according to one of claims 1 - 6, **characterized by** comprising the step of compressing the elastic ring (16) radially in order to fit the elastic ring (16) into a central bore (20) of the inner ring (18) of the bearing (12).

11. Method according to claim (10), **characterized in that** the elastic ring (16) is fitted over the threaded portion (22) of the screw (14) before being compressed and fitted into the central bore (20) of the inner ring (18).

12. Method according to claim (10), **characterized in that** the step of compressing the elastic ring (16) radially is executed while the screw (14) is arranged in the central bore (20) of the inner ring (18).
